# EUROPÄISCHE PATENTSCHRIFT

(11) **EP 0 825 740 B1**
(45) Veröffentlichungstag und Bekanntmachung des Hinweises auf die Patenterteilung: **02.05.2002**
(21) Anmeldenummer: 97113682.5
(22) Anmeldetag: 07.08.1997
(51) Int. Cl.: H04L 12/28, G05B 19/042

(54) **Schaltungsanordnung und Verfahren zur Steuerung elektrischer Hausgeräte**
Circuit and method for controlling electric appliances
Circuit et méthode pour controler des appareils électriques domestiques

(30) Priorität: 23.08.1996 DE 19634165
(43) Veröffentlichungstag der Anmeldung: 25.02.1998
(73) Patentinhaber: BSH Bosch und Siemens Hausgeräte GmbH, 81669 München (DE)
(72) Erfinder: Mühlberg, Bernhard, Dipl.-Ing., 12159 Berlin (DE); Hoch, Peter, Dipl.-Ing., 14169 Berlin (DE); Liese, Frank, Dr. rer. nat., 10781 Berlin (DE); Dittmer, Michael, 13627 Berlin (DE); Kabel, Clemens, Dipl.Inform., 14129 Berlin (DE); Meyer, Hans-Holger, Dipl.-Ing., 12689 Berlin (DE)

(56) Entgegenhaltungen:
- EP-A- 0 488 178
- US-A- 5 349 644

## Beschreibung

Die Erfindung betrifft eine Schaltungsanordnung und ein Verfahren zur Steuerung elektrischer Hausgeräte nach dem Oberbegriff des Anspruchs 1 bzw. nach Anspruch 12.

Aus der deutschen Patentanmeldung DE 44 46 962.4 ist eine Schaltungsanordnung zur Steuerung elektrischer Haushaltsgeräte bekannt, die untereinander, mit einem zentralen Rechner und/oder einer Anzeigeeinrichtung verbindbar sind, wobei den Haushaltsgeräten jeweils eine lokale Steuerung und jeweils ein Speicher zur Zwischenspeicherung von Daten zugeordnet sind. In der lokalen Steuerung eines Haushaltsgeräts ist dabei ein in der Weise ausgestaltetes Steuerungsprogramm zugeordnet, das aus Meß- und/oder Zustandsdaten des jeweiligen Haushaltsgeräts nach einer ersten Verarbeitungsvorschrift erste Zwischenwertdaten gebildet werden. In Abhängigkeit der ersten Zwischenwertdaten oder in Abhängigkeit extern gebildeter zweiter Zwischenwertdaten werden nach einer zweiten Verarbeitungsvorschrift Stellglieder des Haushaltsgeräts gesteuert.

Aus der DE-OS 31 20 723 ist ein Küchenblock mit elektronischer Steuereinrichtung bekannt. Dieser Küchenblock weist eine Halterung mit rasterartig angeordneten Halteelementen, Energieversorgungselementen und Steuerungselementen auf, an der rasterartig eine Mehrzahl von Küchenmodulen lösbar befestigbar sind, die mit der Befestigung an der Halteeinrichtung mit einer elektronischen Steuereinrichtung und Energieversorgungseinrichtung in Wirkverbindung bringbar sind. In diesem Zusammenhang ist vorgeschlagen worden, daß die elektronische Steuereinrichtung als mit den Energieversorgungselementen verbundene Kommunikations- und Steuereinheit ausgebildet ist, die einen Mikroprozessor mit Speicheranordnung aufweist, der mittels eines Bedienfeldes programmierbar ist. Die Steuereinrichtung ist über ein optoelektronisches Kommunikations-Interface mit einem Lichtleiter-Datenbus verbunden, der mit den Küchengeräte-Modulen in Wirkverbindung steht.

Weiterhin ist aus der EP 0 488 178 A2 eine Schaltungsanordnung mit einem zentralen Rechner und einer optischen Anzeigeeinrichtung bekannt, der über ein Busnetzwerk und lokale Steuermodule mit Hausgeräten unterschiedlicher Funktionalität verbindbar ist, wobei der zentrale Rechner zur Kommunikation mit den Hausgeräten, deren Steuerung und zur Bedienerführung dient.

Derartige Steuerungssysteme zur Steuerung einer Mehrzahl von Geräten im häuslichen Bereich, sogenannte Home-Electronic-Systeme (HES), können bei komplexer Konfiguration Bedienprozeduren erfordern, die sich für die potentiellen Bedienpersonen als relativ schwierig erweisen können.

Ausgehend von diesem Stand der Technik liegt der Erfindung die Aufgabe zugrunde, eine Schaltungsanordnung und ein Verfahren der eingangs genannten Art anzugeben, welche auch bei wechselnden Begebenheiten eine einfache Bedienbarkeit ermöglichen.

Die Lösung dieser Aufgabe erfolgt durch eine Schaltungsanordnung und ein Verfahren, die in den Ansprüchen definiert sind.

Die erfindungsgemäße Schaltungsanordnung ermöglicht den Anschluß unterschiedlicher Hausgeräte sowie den Anschluß nicht festinstallierter Geräte (Geräte mit Steckeranschluß), ohne daß es erforderlich ist, manuell Befehle in das Steuerungssystem einzugeben, die eine Aktivierung bzw. Wirkintegration der Geräte im System initiieren. Die Geräte lassen sich in einfacher Weise und durch einen Nichtfachmann anschließen und aktivieren. Unabhängig von dem jeweiligen Ausbauzustand wird die in den Figuren dargestellte Bedienerführung zur Verfügung gestellt.

Die Erfindung wird nun anhand der Zeichnung beschrieben.

Es zeigen
- Fig. 1: ein Blockschaltbild einer erfindungsgemäßen Schaltungsanordnung;
- Fig. 2 bis Fig. 6: Strukturen von Bildschirmmasken, die durch eine Schaltungsanordnung gemäß Figur 1 mit einer optischen Anzeigeeinrichtung darstellbar sind, und Strukturen von Programmteilen des Steuerungsprogramm, das einem Rechner der Schaltungsanordnung zugeordnet ist;
- Fig. 7 bis Fig. 12: Beispiele für Bildschirmmasken, die insbesondere mit Bedienelementen ausgestaltet sind, nach den Figuren 2 bis 6.

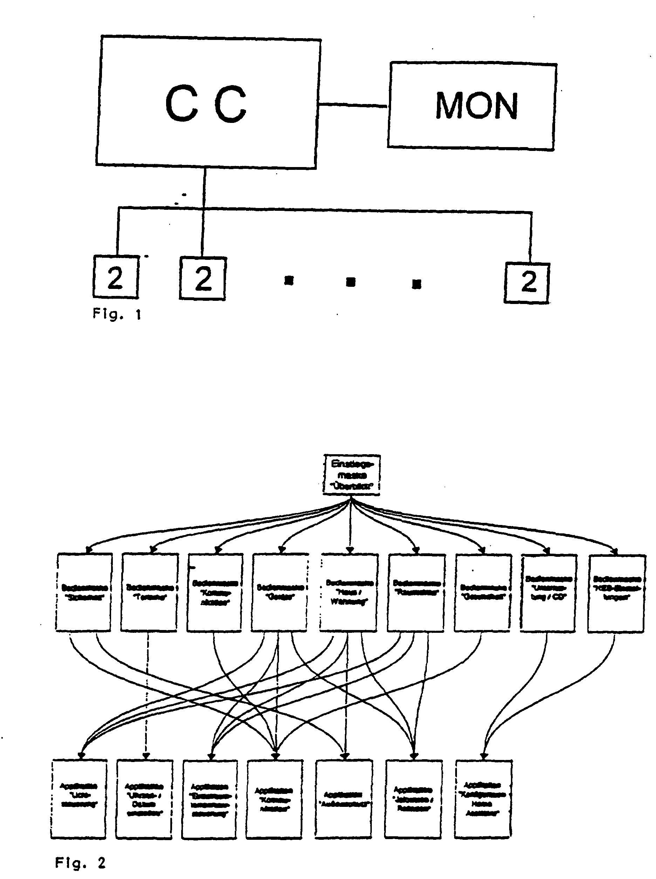

Die in Figur 1 schematisch dargestellte erfindungsgemäße Schaltungsanordnung dient zur Steuerung eines elektrischen Hausgeräts 2 bzw. einer Mehrzahl gleicher Hausgeräte oder insbesondere Hausgeräte unterschiedlicher Funktionalität. Beispiele derartiger Hausgeräte sind eine Waschmaschine, eine Geschirrspülmaschine, eine Klimaanlage, ein Rolladen-Antriebsanlage, Beleuchtungseinrichtungen etc.
Die Schaltungsanordnung umfaßt einen zentralen Rechner CC, der ein handelsüblicher PC sein kann. Der Rechner ist mit einer optischen Anzeigeeinrichtung MON verbunden.

Die in Figur 1 schematisch dargestellten Hausgeräte 2 sind mit dem Rechner CC über eine Steuerdatenleitung und gegebenenfalls über eine Energieversorgungsleitung (Bussystem) verbunden.

Bei der Inbetriebnahme der erfindungsgemäßen Schaltungsanordnung bzw. bei einem Anschluß eines Hausgeräts 2 werden die erfindungsgemäße Schaltungsanordnung und das Hausgerät 2 parametriert, wobei die erfindungsgemäße Schaltungsanordnung und das Hausgerät Informationen (Adressen und Zuordnungen) über das Gesamtsystem, das Schnittstellenschaltungen aufweisen kann, erhalten.
Die Konfiguration der Hausgeräte-Installation ist in einem nicht dargestellten Datenbank-System abgelegt. Dieses wird bei der Installation z.B. durch einen Elektro-Installateur aufgebaut. Zusätzlich zu diesen Daten werden von den Herstellem der Hausgeräte Informationen über diese mitgeliefert, wie noch beschrieben wird.

Die erfindungsgemäße Schaltungsanordnung ermöglicht die spätere Integration von Hausgeräten, ohne bei der Inbetriebnahme Kenntnis darüber zu haben, was für Hausgeräte 2 später in das System integriert werden. Werden später Hausgeräte 2 angeschlossen, so verhalten sich diese wie System-Komponenten, die bereits bei der Inbetriebnahme in das Bussystem integriert wurden. Der Anschluß der Hausgeräte 2 und deren logische Integration kann ohne einen Fachmann vorgenommen werden.

Die erfindungsgemäße Schaltungsanordnung zur Steuerung elektrischer Hausgeräte 2 weist also einen zentralen Rechner CC auf, der mit einer optischen Anzeigeeinrichtung MON und mit den Hausgeräten 2 unterschiedlicher Funktionalität verbindbar ist. Dem zentralen Rechner CC ist ein Steuerungsprogramm zugeordnet, das einen ersten Programmteil aufweist, mit dem die Übertragung von Daten zwischen zentralem Rechner CC und Hausgeräten 2 durchgeführt wird. Zu diesen Daten gehören Zustandswerte der Hausgeräte und Steuerungsbefehle, mit denen die Hausgeräte gesteuert werden.

Das dem zentralen Rechner CC zugeordnete Steuerungsprogramm weist neben dem ersten Programmteil mindestens einen zweiten Programmteil auf, mit dem Daten verarbeitet werden, auf deren Grundlage unterschiedliche Funktionen durch mindestens ein Hausgerät realisiert werden. Ein Beispiel für eine derartige Funktion ist die Funktion "Raumtemperatur', die durch die Steuerung einer Raumheizungseinrichtung und durch ein Jalousienantriebsaggregat realisiert wird. Ein weiteres Beispiel ist die Funktion "Kommunikation", die durch ein Telefon, ein Faxgerät oder einen Anrufbeantworter realisiert werden kann.

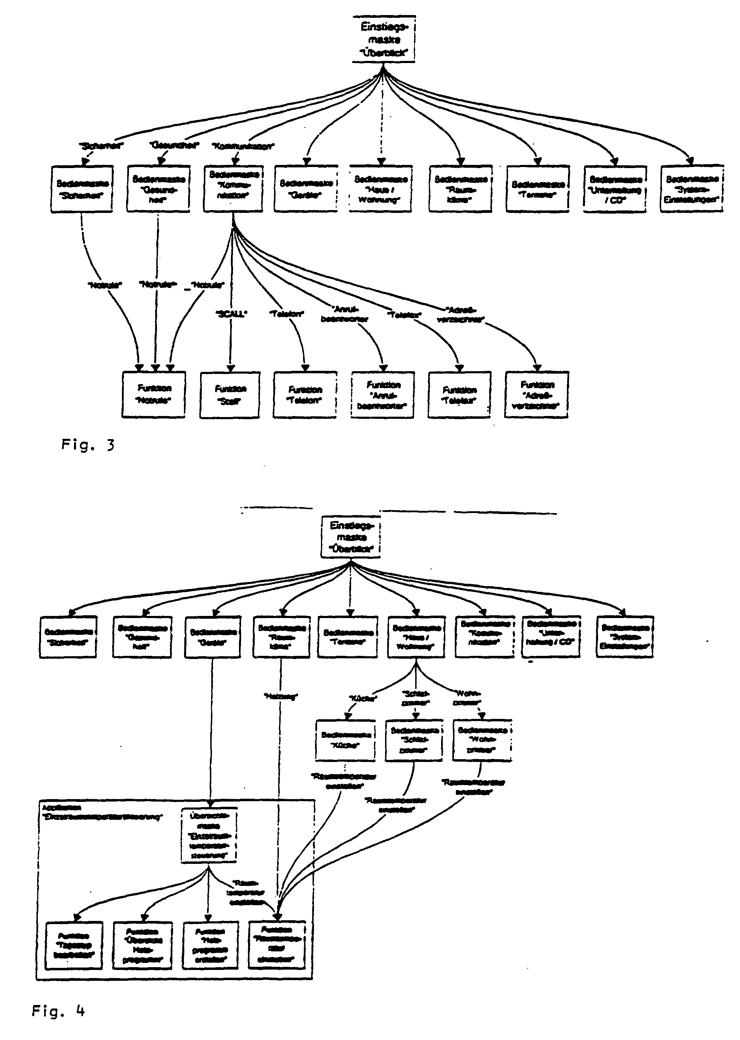

Darüber hinaus weist das dem zentralen Rechner CC zugeordnete Steuerungsprogramm einen dritten Programmteil auf, mit dem Daten verarbeitet werden, auf deren Grundlage eine Bedienerführung realisiert wird. Die Struktur und der Umfang einer möglichen Bedienerführung ergeben sich aus den Figuren 2 bis 12.

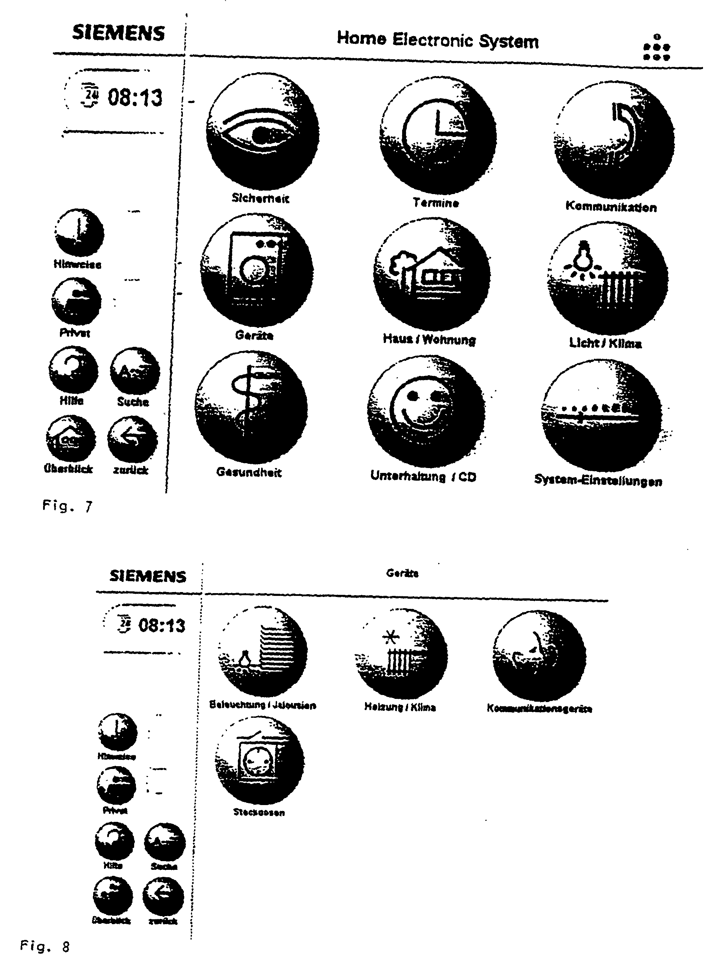

Weiterhin ist das dem zentralen Rechner CC zugeordnete Steuerungsprogramm in der Weise ausgestaltet, daß Masken auf der optischen Anzeigeeinrichtung MON darstellbar sind, die dem ersten und/oder dem zweiten und/oder dem dritten Programmteil zugeordnet sind. Beispiele für derartige Masken sind in den Figuren 7 bis 12 dargestellt.

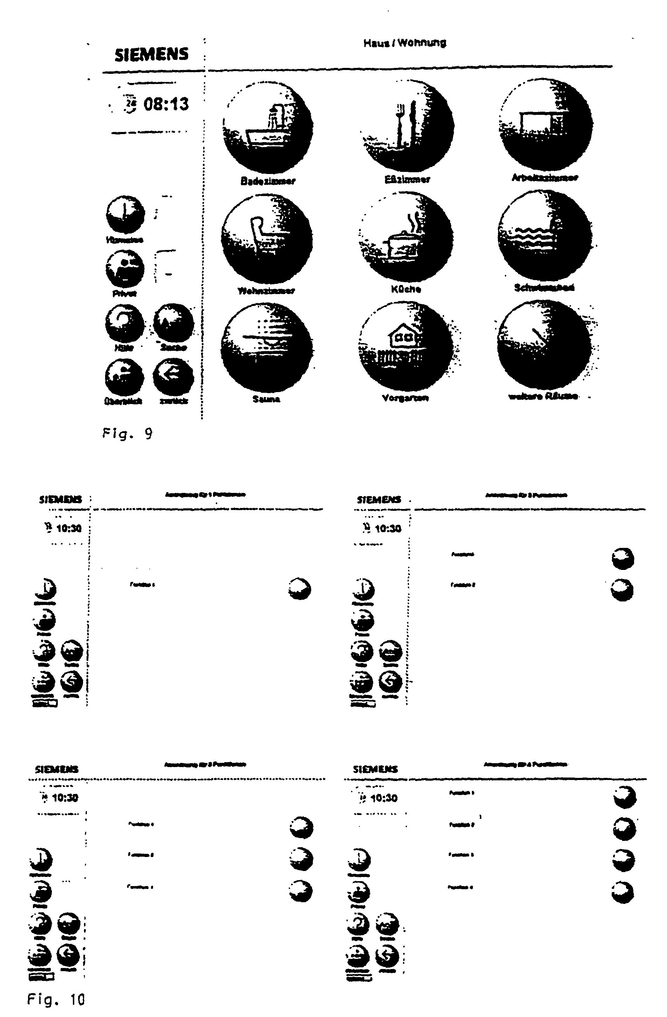

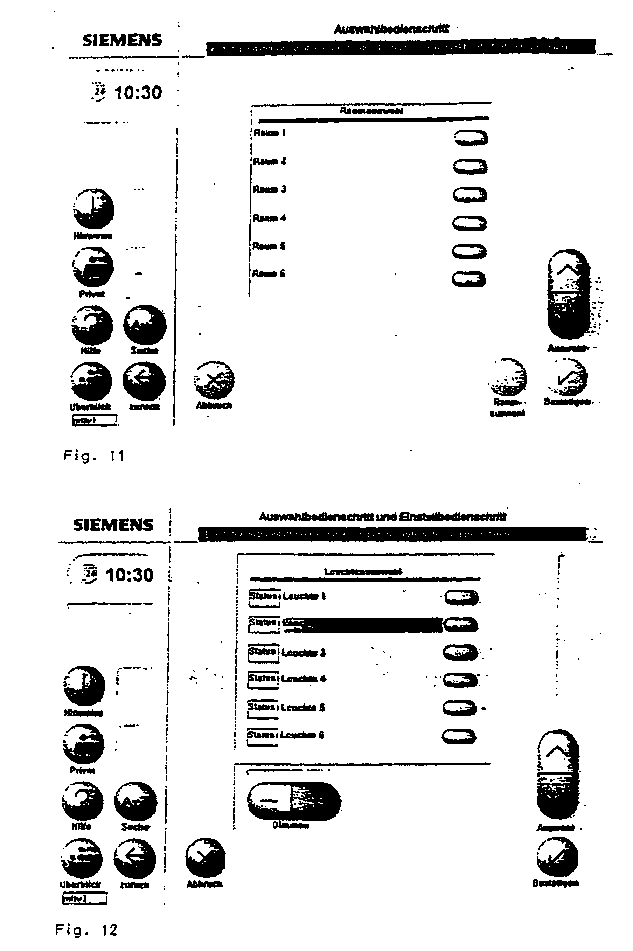

Die optischen Anzeigeeinrichtung MON ist insbesondere ein berührungssensitiver Bildschirm. Die vorstehend erwähnten Masken weisen berührungssensitive Bedienelemente auf, durch deren Berührung vorgebbare Eingabebefehle generiert werden. Beispiele für derartige Bedienelemente sind in Figur 7 die kreisförmigen Bedienelemente, die mit "Sicherheit", "Termine", "Kommunikation", "Geräte", usw. bezeichnet sind; in Figur 8, die die Bildschirmmaske zeigt, wenn in der in Figur 7 dargestellten Bilddschirmmaske das Bedienelement "Geräte" betätigt wird, sind dies die Bedienelemente, die mit "Beleuchtung/Jalousien", "Heizung/Klima", "Kommunikationsgeräte", "Steckdosen" bezeichnet sind. In den Figur 10 a) bis d) sind dies ebenfalls die kreisförmigen Bedienelemente, die mit "Funktion 1" bzw. "Funktion 2" bzw. "Funktion 3" bzw. "Funktion 4" bezeichnet sind. Damit werden in der Bedienerführung 1, 2, 3 oder 4 Verzweigungsmöglichkeiten geschaffen. Bei den in den Figuren 11 und 12 dargestellten Bildschirmmasken werden jeweils 6 Verzweigungsmöglichkeiten geschaffen (Raum 1 bis Raum 6 bzw. Leuchte 1 bis Leuchte 6).

Das dem zentralen Rechner CC zugeordnete Steuerungsprogramm ordnet den Masken eine Hierarchie in der Weise zu, daß den dem dritten Programmteil zugeordneten Masken die oberste Hierarchiestufe zugeordnet ist, und daß den dem ersten Programmteil zugeordneten Masken die unterste Hierarchiestufe zugeordnet ist (z.B. "Übersichtsmaske "Einzelraum-Temperatursteuerung" und Funktion "Raumtemperatur einstellen").

In diesem Zusammenhang kann vorgesehen sein, daß den Masken eine Hierarchie aus mindestens drei Ebenen zuordnet ist.

Eine dem dritten Programmteil zugeordnete Maske ("Verteilermaske") weist jeweils mindestens ein Bedienelement auf, wobei das dem zentralen Rechner CC zugeordnete Steuerungsprogramm in der Weise ausgestaltet ist, daß ausgelöst durch die Betätigung des Bedienelements eine weitere dem dritten Programmteil zugeordnete Maske oder eine dem ersten und/oder zweiten Programmteil zugeordnete Maske auf der optischen Anzeigeeinrichtung MON dargestellt wird. Die Verteilermasken sind eine Art von Sprungverteiler. Auf dem Maskenarbeitsbereich sind Bedienelemente angeordnet, von denen man aus weitere Verteilermasken oder sogenannte Arbeitsmasken, d.h. Masken einer unteren Hierarchiestufe, erreichen kann.

Dem dritten Programmteil sind mindestens zwei Masken ("Verteilermasken") zugeordnet, wobei das dem zentralen Rechner CC zugeordnete Steuerungsprogramm den mindestens zwei Masken zwei unterschiedliche Hierarchieebenen in der Weise zugeordnet, daß eine Maske ("Einstiegsmaske", Figur 2 oben) einer oberen Hierarchiebene nicht veränderbar ist und daß mindestens eine weitere Maske ("Verteilermaske") einer unteren Hierarchiebene in Abhängigkeit von der jeweiligen Konfiguration des Systems veränderbar ist.

Wie schon beschrieben ist den Masken, wie in den Figuren 2 bis 6 dargestellt, eine Hierarchie in der Weise zuordnet, daß den dem dritten Programmteil zugeordneten Masken die oberste Hierarchiestufe zugeordnet ist, während den dem ersten Programmteil zugeordneten Masken die unterste Hierarchiestufe zugeordnet ist. Damit werden nach einer Initialisierung der Schaltungsanordnung zunächst die Masken der oberen Hierarchiestufen auf der optischen Anzeigeeinrichtung MON dargestellt (Einsstiegsmaske "Überblick") und im Anschluß daran werden ausgelöst durch eine Betätigung der Bedienelemente Masken weiterer Hierarchiestufen (z.B Bedienmaske "Raumklima" und Applikation "Jalousien/Rolläden") dargestellt.

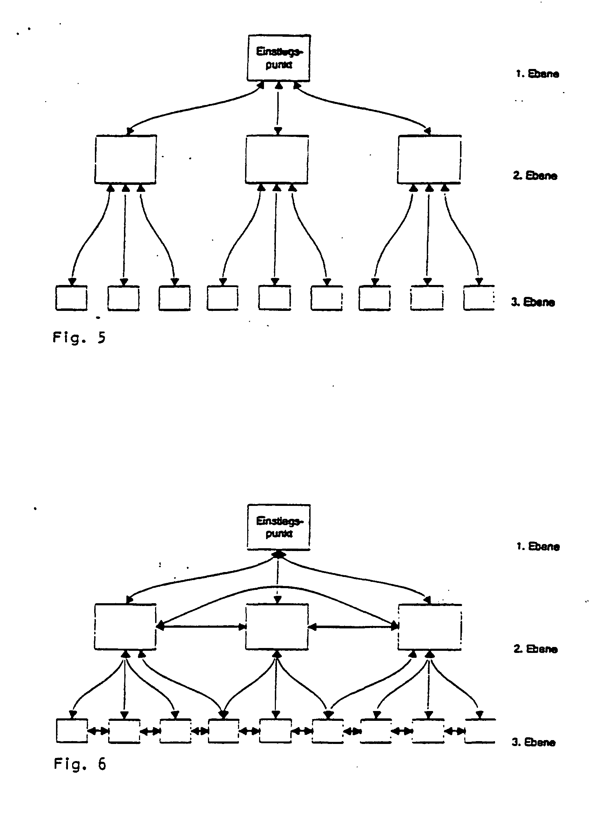

Erfindungsgemäß ist weiterhin vorgesehen, daß das dem zentralen Rechner CC zugeordnete Steuerungsprogramm in der Weise ausgestaltet ist, daß ausgelöst durch eine dem zentralen Rechner CC zugeführte erste Information, die den Anschluß eines Hausgeräts an die Schaltungsanordnung bezeichnet, und eine zweite Information, die das Hausgerät identifiziert, die Daten des ersten und zweiten Programmteils aktualisiert werden. Beim Anschluß eines weiteren Hausgeräts werden selbsttätig die genannten Programmteile verändert. Wird beispielsweise ein Personalcomputer an die erfindungsgemäße Schaltungsanordnung bzw. an den Rechner CC angeschlossen, der die Funktion "Kommunikation" (bei Anschluß eines Modems") hat als auch die Funktion "Unterhaltung" (bei der Ausstattung mit Computerspielen", so werden, nachdem eine den Anschluß des Personalcomputers bezeichnende Information dem Rechner CC zugeführt worden, bei Betätigung des Bedienelements "Kommunikation" oder "Unterhaltung" in Figur 2 Verzweigungen zu einer Bedienmaske gebildet, die über Bedienelemente z.B. die Steuerung des Personalcomputers bzw. die Abfrage von Daten ermöglicht, die den Personalcomputer betreffen. Die möglichen Verzweigungen sind in den Figuren 5 und 6 dargestellt. Diese Figuren zeigen, welche Hierarchieelemente des Steuerungsprogramms bzw. der Bildschirmmasken durch den Anschluß eines weiteren Hausgeräts betroffen sind. Während bei der in Figur 5 dargestellten Vertikalstruktur des Steuerungsprogramms bzw. der Maskenhierarchie vom Anschluß eines weiteren Hausgeräts bzw. von der Abtrennung eines Hausgeräts (3. Ebene) nur Hierarchieelemenete höherer Ebenen betroffen sind, sind die Auswirkungen bei der in Figur 6 dargestellten Hierachiestruktur weitergehender, da auch Hierarchieelemente derselben Hierarchieebene betroffen sind.

Dort werden aufgrund von Informationen aus einer Datenbank und Steuerdateien, die zu den Applikationen gehören, Querverweise aufgebaut (horizontale Pfeile in der 3. ebene in Figur 6). Diese Querverweise dienen dazu, zunächst für alle betroffenen Hausgeräte ein Abbild innerhalb der Software anzulegen. Für jedes dieser Abbilder wird nun bestimmt, auf welche Bildschirmmaske die Steuerung für das Abbild plaziert werden muß.

Sind diese Informationen vorhanden, so werden aus einem Pool von Bedienelementen die benötigten auf dynamisch erstellte Masken kopiert. Die Verweise auf diese Masken werden ebenfalls dynamisch angelegt und dann in die Grundmasken eingetragen.

Sind die Grundmasken gefüllt, so wird eine Zwischenebene auf der Basis der Applikationsinformationen in die Bedienstruktur eingeführt, so daß immer alle Geräte, evtl. auf Kosten eines zusätzlichen Bedienschritts bedienbar bleiben.

Die benötigten Datenbankeinträge sind in einer an die vom Installateur erstellten Konfigurationsdatenbank verknüpften Datenbank hinterlegt.

Die Steuerinformationen der Applikationen sind in sog. HCG-Files an jede Applikation für Rechner angefügt.
Darüber hinaus bringt jede Applikation ein Konfigurationsprogramm mit, das die applikationsspezifischen Steuerungen aus der Datenbank heraus generiert, und die Bildschirmmasken aufbaut.

Die Software, die hinsichtlich ihrer Funktionen beschrieben wurde, wird auf einem Standard-Betriebssystem installiert und mit objektorientierter Programmierung in C++ erstellt.

Die Software besteht aus einem Kern, dem Kemel, und Applikationen, die später hinzugefügt werden können.

Durch die oben beschriebenen Informationen, die dort so benannte erste und zweite Information, werden auch die Daten des dritten Programmteils aktualisiert. Durch den Anschluß eines Hausgeräts an den Rechner wird also der Inhalt der genannten Programmteile und damit auch die zugeordneten darstellbaren Bedienmasken geändert.

Die erste Information, die den Anschluß eines Hausgeräts an die Schaltungsanordnung bezeichnet, ist in die Schaltungsanordnung beispielsweise über eine Tastatur eingebbar. Es kann auch vorgesehen sein, daß diese erste Information durch ein Schaltungselement der Schaltungsanordnung gebildet wird, welches den Anschluß des Hausgeräts an die Schaltungsanordnung erkennt. Die Erkennung erfolgt in der Weise, daß das Schaltungselement beim Anschluß eines Hausgeräts mit dessen Massekontakt verbunden wird, so daß dem Schaltungselement das Massepotential zugeführt wird.

Die Erfindung betrifft auch ein Hausgerät 2, das an eine erfindungsgemäße Schaltungsanordnung bzw. an einen Rechner CC anschließbar ist. Ein solches Hausgerät weist insbesondere einen Speicher auf, in dem eine das Hausgerät identifizierende Information abspeicherbar ist. Diese Information wird zum Zeitpunkt des Anschlusses oder bei einer Abfrage an den Rechner übertragen, der dann die Aktualisierung der genannten Programmteile bzw. der entsprechenden Bildschirmmasken vornimmt.

Diese ein Hausgerät identifizierende Information kann auf einem Datenträger, z.B. einem Magnetstreifen, Chip etc. abgespeichert sind, welcher im Hausgerät fest angeordnet ist bzw. in dieses einführbar ist.

Die Erfindung betrifft auch ein Verfahren zur Steuerung elektrischer Hausgeräte mit einer vorstehend beschriebenen Schaltungsanordnung. Im Rahmen des Verfahrens werden Daten zwischen zentralem Rechner CC und Hausgeräten übertragen und Daten verarbeitet, auf deren Grundlage unterschiedliche Funktionen durch mindestens ein Hausgerät realisiert werden. Es werden auch Daten verarbeitet, auf deren Grundlage die Bedienerführung realisiert wird.

In diesem Zusammenhang werden Masken auf der optischen Anzeigeeinrichtung MON dargestellt, die dem ersten und/oder dem zweiten und/oder dem dritten Programmteil zugeordnet sind.

Wie schon beschrieben, werden nach einer Initialisierung der Schaltungsanordnung zunächst die Masken der oberen Hierarchiestufen auf der optischen Anzeigeeinrichtung MON dargestellt und im Anschluß daran ausgelöst durch eine Betätigung der Bedienelemente Masken weiterer Hierarchiestufen dargestellt.

Ausgelöst durch eine dem zentralen Rechner CC zugeführte erste Information, die den Anschluß eines Hausgeräts an die Schaltungsanordnung bezeichnet, und ausgelöst durch eine zweite Information, die das Hausgerät identifiziert, werden die Daten des ersten, zweiten und/oder dritten Programmteils aktualisiert.

## Patentansprüche

1. Schaltungsanordnung (1) zur Steuerung elektrischer Hausgeräte (2), wobei die Schaltungsanordnung einen zentralen Rechner (CC) aufweist, der mit einer optischen Anzeigeeinrichtung (MON) und mit den Hausgeräten (2) unterschiedlicher Funktionalität verbindbar ist, wobei dem zentralen Rechner (CC) ein Steuerungsprogramm zugeordnet ist, das einen ersten Programmteil aufweist, mit dem die Übertragung von Daten zwischen zentralem Rechner (CC) und Hausgeräten (2) durchgeführt wird, **dadurch gekennzeichnet, daß** das dem zentralen Rechner (CC) zugeordnete Steuerungsprogramm neben dem ersten Programmteil mindestens einen zweiten Programmteil aufweist, mit dem Daten verarbeitet werden, auf deren Grundlage unterschiedliche Funktionen durch mindestens ein Hausgerät realisiert werden und daß das Steuerungsprogramm in der Weise ausgestaltet ist, daß ausgelöst durch eine dem zentralen Rechner (CC) zugeführte erste Information, die den Anschluß eines Hausgeräts an die Schaltungsanordnung bezeichnet, und eine zweite Information, die das Hausgerät identifiziert, die Daten des ersten und zweiten Programmteils aktualisiert werden.

2. Schaltungsanordnung nach Anspruch 1, **dadurch gekennzeichnet, daß** das dem zentralen Rechner (CC) zugeordnete Steuerungsprogramm einen dritten Programmteil aufweist, mit dem Daten verarbeitet werden, auf deren Grundlage eine Bedienerführung realisiert wird.

3. Schaltungsanordnung nach Anspruch 1 oder 2, **dadurch gekennzeichnet, daß** das dem zentralen Rechner (CC) zugeordnete Steuerungsprogramm in der Weise ausgestaltet ist, daß Masken auf der optischen Anzeigeeinrichtung (MON) darstellbar sind, die dem ersten und/oder dem zweiten und/oder dem dritten Programmteil zugeordnet sind.

4. Schaltungsanordnung nach Anspruch 3, **dadurch gekennzeichnet, daß** die optischen Anzeigeeinrichtung (MON) ein berührungssensitiver Bildschirm ist, und daß das dem zentralen Rechner (CC) zugeordnete Steuerungsprogramm in der Weise ausgestaltet ist, daß die Masken jeweils mindestens ein Bedienelement in Form berührungssensitiver Schalter aufweisen.

5. Schaltungsanordnung nach Anspruch 4, **dadurch gekennzeichnet, daß** das dem zentralen Rechner (CC) zugeordnete Steuerungsprogramm den Masken eine Hierarchie in der Weise zuordnet, daß den dem dritten Programmteil zugeordneten Masken die oberste Hierarchiestufe zugeordnet ist, und daß den dem ersten Programmteil zugeordneten Masken die unterste Hierarchiestufe zugeordnet ist, so daß nach einer Initialisierung der Schaltungsanordnung zunächst die Masken der oberen Hierarchiestufen auf der optischen Anzeigeeinrichtung (MON) dargestellt werden und im Anschluß daran ausgelöst durch eine Betätigung der Bedienelemente Masken weiterer Hierarchiestufen darstellbar sind.

6. Schaltungsanordnung nach Anspruch 5, **dadurch gekennzeichnet, daß** das dem zentralen Rechner (CC) zugeordnete Steuerungsprogramm den Masken eine Hierarchie aus mindestens drei Ebenen zuordnet, und daß den dem dritten Programmteil zugeordneten Masken die oberste Hierarchiestufe zugeordnet ist, und daß den dem ersten Programmteil zugeordneten Masken die unterste Hierarchiestufe zugeordnet ist.

7. Schaltungsanordnung nach Anspruch 3 und 4, **dadurch gekennzeichnet, daß** eine dem dritten Programmteil zugeordnete Maske ("Verteilmaske") jeweils mindestens ein Bedienelement aufweist, und daß das dem zentralen Rechner (CC) zugeordnete Steuerungsprogramm in der Weise ausgestaltet ist, daß ausgelöst durch die Betätigung des Bedienelements eine weitere dem dritten Programmteil zugeordnete Maske oder eine dem ersten und/oder zweiten Programmteil zugeordnete Maske auf der optischen Anzeigeeinrichtung (MON) dargestellt wird.

8. Schaltungsanordnung nach Anspruch 7, **dadurch gekennzeichnet, daß** dem dritten Programmteil mindestens zwei Masken ("Verteilmasken") zugeordnet sind, und daß das dem zentralen Rechner (CC) zugeordnete Steuerungsprogramm den mindestens zwei Masken zwei unterschiedliche Hierarchieebenen in der Weise zugeordnet, daß eine Maske ("Einstiegsmaske") einer oberen Hierarchiebene nicht veränderbar ist und daß mindestens eine weitere Maske ("Verteilmaske") einer unteren Hierarchiebene veränderbar ist.

9. Schaltungsanordnung nach einem der Ansprüche 2 bis 8, **dadurch gekennzeichnet, daß** das dem zentralen Rechner (CC) zugeordnete Steuerungsprogramm in der Weise ausgestaltet ist, daß ausgelöst durch die dem zentralen Rechner (CC) zugeführte erste Information, die den Anschluß eines Hausgeräts an die Schaltungsanordnung bezeichnet, und die zweite Information, die das Hausgerät identifiziert, die Daten des dritten Programmteils aktualisiert werden, und daß Masken auf der optischen Anzeigeeinrichtung (MON) darstellbar sind, die dem aktualisierten ersten und/oder dem aktualisierten zweiten und/oder dem aktualisierten dritten Programmteil zugeordnet sind.

10. Schaltungsanordnung nach Anspruch 9, **dadurch gekennzeichnet, daß** die erste Information, die den Anschluß eines Hausgeräts an die Schaltungsanordnung bezeichnet, in die Schaltungsanordnung eingebbar ist, oder durch ein Schaltungselement der Schaltungsanordnung gebildet wird, welches den Anschluß des Hausgeräts an die Schaltungsanordnung erkennt.

11. Hausgerät (2) für den Anschluß an eine Schaltungsanordnung (1) nach einem der vorstehenden Ansprüche, **dadurch gekennzeichnet, daß** das Hausgerät (2) einen Speicher (10) aufweist, in dem eine das Hausgerät (2) identifizierende Information abspeicherbar ist.

12. Verfahren zur Steuerung elektrischer Hausgeräte mittels einer Schaltungsanordnung (1), mit einem zentralen Rechner (CC), der mit einer optischen Anzeigeeinrichtung (MON) und mit den Hausgeräten (2) unterschiedlicher Funktionalität verbindbar ist, wobei erste Daten zwischen zentralem Rechner (CC) und Hausgeräten (2) übertragen werden, **dadurch gekennzeichnet, daß** zweite Daten verarbeitet werden, auf deren Grundlage unterschiedliche Funktionen durch mindestens ein Hausgerät realisiert werden, und daß ausgelöst durch eine dem zentralen Rechner (CC) zugeführte erste Information, die den Anschluß eines Hausgeräts an die Schaltungsanordnung bezeichnet, und eine zweite Information, die das Hausgerät identifiziert, die ersten und zweiten Daten aktualisiert werden.

13. Verfahren nach Anspruch 12, **dadurch gekennzeichnet, daß** Daten verarbeitet werden, auf deren Grundlage eine Bedienerführung realisiert wird.

14. Verfahren nach einem der Ansprüche 12 oder 13, **dadurch gekennzeichnet, daß** Masken auf der optischen Anzeigeeinrichtung (MON) dargestellt werden, die den ersten und/oder den zweiten Daten zugeordnet sind.

15. Verfahren nach einem der Ansprüche 12 bis 14, **dadurch gekennzeichnet, daß** nach einer Initialisierung der Schaltungsanordnung zunächst die Masken einer oberen Hierarchiestufe auf der optischen Anzeigeeinrichtung (MON) dargestellt werden und im Anschluß daran ausgelöst durch eine Betätigung von Bedienelementen Masken weiterer Hierarchiestufen dargestellt werden.

16. Verfahren nach einem der Ansprüche 12 bis 15, **dadurch gekennzeichnet, daß** ausgelöst durch eine dem zentralen Rechner (CC) zugeführte erste Information, die den Anschluß eines Hausgeräts an die Schaltungsanordnung bezeichnet, und eine zweite Information, die das Hausgerät identifiziert, die ersten und zweiten Daten aktualisiert werden.

## Claims

1. Circuit arrangement (1) for controlling electric domestic appliances (2), wherein the circuit arrangement comprises a central computer (CC) connectible with an optical display device (MON) and with the domestic appliances (2) of different functionality, wherein the central computer (CC) is associated with a control program which comprises a first program part by which the transfer of data between central computer (CC) and domestic appliances (2) is undertaken, **characterised in that** the control program associated with the central computer (CC) comprises, apart from the first program part, at least one second program part by which data is processed on the basis of which different functions are realised by at least one domestic appliance, and that the control program is designed in the manner that the data of the first and second program part are actualised triggered by a first item of information which is fed to the central computer (CC) and denotes the connection of a domestic appliance to the circuit arrangement and a second item of information which identifies the domestic appliance.

2. Circuit arrangement according to claim 1, **characterised in that** the control program associated with the central computer (CC) comprises a third program part by which data are processed on the basis of which a user prompt is realised.

3. Circuit arrangement according to claim 1 or 2, **characterised in that** the control program associated with the central computer (CC) is designed in the manner that masks, which are associated with the first and/or the second and/or the third program part, can be illustrated on the optical display device (MON).

4. Circuit arrangement according to claim 3, **characterised in that** the optical display device (MON) is a touch-sensitive screen and that the control program associated with the central computer (CC) is designed in the manner that the masks each have at least one operating element in the form of a touch-sensitive switch.

5. Circuit arrangement according to claim 4, **characterised in that** the control program associated with the central computer (CC) assigns to the mask a hierarchy in the manner that the uppermost hierarchy stage is associated with the masks associated with the third program part and that the lowermost hierarchy stage is associated with the masks associated with the first program part, so that after an initialisation of the circuit arrangement initially the masks of the upper hierarchy stages are illustrated on the optical display device (MON) and subsequently thereto, and triggered by an actuation of the operating elements, masks of further hierarchy stages can be illustrated.

6. Circuit arrangement according to claim 5, **characterised in that** the control program associated with the central computer (CC) associates a hierarchy of at least three planes with the masks and that the uppermost hierarchy stage is associated with the masks associated with the third program part and that the lowermost hierarchy stage is associated with the masks associated with the first program part.

7. Circuit arrangement according to claim 3 and 4, **characterised in that** a mask ("distribute mask") associated with the third program part comprises at least one operating element, and that the control program associated with the central computer (CC) is designed in the manner that, triggered by the actuation of the operating element, a further mask associated with the third program part or a mask associated with the first and/or second program part is illustrated on the optical display device (MON).

8. Circuit arrangement according to claim 7, **characterised in that** at least two masks ("distribute masks") are associated with the third program part, and that the control program associated with the central computer (CC) assigns two different hierarchy planes to the at least two masks in the manner that a mask ("access mask") of an upper hierarchy plane is non-variable and that at least one further mask ("distribute mask") of a lower hierarchy plane is variable.

9. Circuit arrangement according to one of claims 2 to 8, **characterised in that** the control program associated with the central computer (CC) is designed in such a manner that, triggered by the first item of information which is fed to the central computer (CC) and denotes the connection of a domestic appliance to the circuit arrangement and the second item of information which identifies the domestic appliance, the data of the third program part are actualised and that masks can be illustrated on the optical display device (MON) which are associated with the actualised first and/or the actualised second and/or the actualised third program part.

10. Circuit arrangement according to claim 9, **characterised in that** the first item of information which denotes the connection of a domestic appliance. to the circuit arrangement can be input into the circuit arrangement or is formed by a circuit element of the circuit arrangement which recognises the connection of the domestic appliance to the circuit arrangement.

11. Domestic appliance (2) for connection to the circuit arrangement (1) according to one of the preceding claims, **characterised in that** the domestic appliance (2) has a memory (10) in which an item of information identifying the domestic appliance (2) can be stored.

12. Method of controlling electrical domestic appliances by means of a circuit arrangement (1), comprising a central computer (CC) with which an optical display device (MON) and domestic appliances (2) of different functionality are connectible, wherein first data are transferred between central computer (CC) and domestic appliances (2), **characterised in that** second data are processed on the basis of which different functions are realised by at least one domestic appliance, and that the first and second data are actualised triggered by a first item of information which is fed to the central computer (CC) and denotes the connection of a domestic appliance to the circuit arrangement and a second item of information which identifies the domestic appliance.

13. Method according to claim 12, **characterised in that** data are processed on the basis of which a user prompt is realised.

14. Method according to claim 12 or 13, **characterised in that** masks are illustrated on the optical display device (MON), which are associated with the first and/or the second data.

15. Method according to one of claims 12 to 14, **characterised in that** after an initialisation of the circuit arrangement initially the masks of an upper hierarchy stage are illustrated on the optical display device (MON) and subsequently thereto, and triggered by an actuation of operating elements, masks of further hierarchy stages are illustrated.

16. Method according to one of claims 12 to 15, **characterised in that** the first and second data are actualised by a first item of information which is fed to the central computer (CC) and denotes the connection of a domestic appliance to the circuit arrangement and a second item of information which identifies the domestic appliance.

## Revendications

1. Circuit (1) pour contrôler des appareils électriques (2) domestiques, le circuit présentant un ordinateur central (CC) pouvant être connecté à un dispositif d'affichage optique (MON) et aux appareils domestiques (2) de fonctionnalité différente, un programme de commande étant affecté à l'ordinateur central (CC), le programme de commande présentant une première partie de programme avec laquelle la transmission de données entre l'ordinateur central (CC) et les appareils domestiques (2) est exécutée, **caractérisé en ce que** le programme de commande affecté à l'ordinateur central (CC) présente, outre la première partie de programme, au moins une deuxième partie de programme avec laquelle des données sont traitées, sur la base desquelles différentes fonctions sont réalisées par au moins un appareil domestique et **en ce que** le programme de commande est conçu de telle manière que les données de la première et de la deuxième partie de programme, déclenchées par une première information amenée à l'ordinateur central (CC) et désignant la connexion d'un appareil domestique au circuit, et par une seconde information identifiant l'appareil, sont actualisées.

2. Circuit selon la revendication 1, **caractérisé en ce que** le programme de commande affecté à l'ordinateur central (CC) présente une troisième partie de programme avec laquelle des données sont traitées, sur la base desquelles un guide opérateur est réalisé.

3. Circuit selon la revendication 1 ou 2, **caractérisé en ce que** le programme de commande affecté à l'ordinateur central (CC) est conçu de telle manière que des masques peuvent être représentés sur le dispositif d'affichage optique (MON), ces masques étant affectés à la première partie de programme et/ou à la deuxième et/ou à la troisième.

4. Circuit selon la revendication 3, **caractérisé en ce que le** dispositif d'affichage optique (MON) est un écran tactile et **en ce que** le programme de commande affecté à l'ordinateur central (CC) est conçu de telle manière que les masques présentent chacun au moins un élément de commande sous forme de commutateurs tactiles.

5. Circuit selon la revendication 4, **caractérisé en ce que** le programme de commande affecté à l'ordinateur central (CC) attribue une hiérarchie aux masques, de telle manière que le niveau hiérarchique supérieur est attribué aux masques affectés à la troisième partie de programme et **en ce que** le niveau hiérarchique inférieur est attribué aux masques affectés à la première partie de programme, de telle sorte qu'après une initialisation du circuit les masques du niveau hiérarchique supérieur sont d'abord représentés sur le dispositif d'affichage optique (MON) et que, suite à cela, des masques d'autres niveaux hiérarchiques, déclenchés par l'activation des éléments de commande, peuvent être représentés.

6. Circuit selon la revendication 5, **caractérisé en ce que** le programme de commande affecté à l'ordinateur central (CC) attribue aux masques une hiérarchie d'au moins trois niveaux et **en ce que** le niveau hiérarchique supérieur est attribué aux masques affectés à la troisième partie de programme et **en ce que** le niveau hiérarchique inférieur est attribué aux masques affectés à la première partie de programme.

7. Circuit selon les revendications 3 et 4, **caractérisé en ce qu'**un masque ("masque de distribution") affecté à la troisième partie de programme présente respectivement au moins un élément de commande et **en ce que** le programme de commande affecté à l'ordinateur central (CC) est conçu de telle manière que, déclenché par l'activation de l'élément de commande, un autre masque affecté à la troisième partie de programme ou un masque affecté à la première et/ou à la deuxième partie de programme est représenté sur le dispositif d'affichage optique (MON).

8. Circuit selon la revendication 7, **caractérisé en ce qu'**au moins deux masques ("masques de distribution") sont affectés à la troisième partie de programme et **en ce que** le programme de commande affecté à l'ordinateur central (CC) attribue deux niveaux hiérarchiques différents aux au moins deux masques, de telle manière qu'un masque ("masque de départ") d'un niveau hiérarchique supérieur n'est pas modifiable et qu'au moins un autre masque ("masque de distribution") d'un niveau hiérarchique inférieur est modifiable.

9. Circuit selon l'une des revendications 2 à 8, **caractérisé en ce que** le programme de commande affecté à l'ordinateur central (CC) est conçu de telle manière que, déclenchées par la première information amenée à l'ordinateur central (CC), qui désigne la connexion d'un appareil domestique au circuit, et par la deuxième information qui identifie l'appareil domestique, les données de la troisième partie de programme sont actualisées et **en ce que** des masques peuvent être représentés sur le dispositif d'affichage optique (MON), ces masques étant affectés à la première partie actualisée du programme et/ou à la deuxième partie actualisée du programme et/ou à la troisième partie actualisée du programme.

10. Circuit selon la revendication 9, **caractérisé en ce que** la première information qui désigne la connexion d'un appareil domestique au circuit peut être entrée dans le circuit ou est formée par un élément du circuit, lequel identifie la connexion de l'appareil domestique au circuit.

11. Appareil domestique (2) pour la connexion à un circuit (1) selon l'une des revendications précédentes, **caractérisé en ce que** l'appareil domestique (2) présente une mémoire (10) dans laquelle une information identifiant l'appareil domestique (2) est mémorisable.

12. Procédé pour contrôler des appareils domestique au moyen d'un circuit (1), avec un ordinateur central (CC) pouvant être connecté à un dispositif d'affichage optique (MON) et aux appareils domestiques (2) de fonctionnalité différente, des premières données étant transmises entre l'ordinateur central (CC) et les appareils domestiques (2), **caractérisé en ce que** des secondes données sont traitées sur la base desquelles différentes fonctions sont réalisées par au moins un appareil domestique, et **en ce que**, déclenchées par une première information amenée à l'ordinateur central (CC), qui désigne la connexion d'un appareil domestique au circuit, et par une seconde information qui identifie l'appareil domestique, les premières et les secondes données sont actualisées.

13. Procédé selon la revendication 12, **caractérisé en ce que** des données sont traitées, sur la base desquelles un guide opérateur est réalisé.

14. Procédé selon l'une des revendications 12 ou 13, **caractérisé en ce que** des masques sont représentés sur le dispositif d'affichage optique (MON), ces masques étant affectés aux premières et/ou aux secondes données.

15. Procédé selon l'une des revendications 12 à 14, **caractérisé en ce qu'**après une initialisation du circuit, les masques d'un niveau hiérarchique supérieur sont d'abord représentés sur le dispositif d'affichage optique (MON) et qu'à la suite de cela, déclenchés par une activation d'éléments de commande, d'autres niveaux hiérarchiques sont représentés.

16. Procédé selon l'une des revendications 12 à 15, **caractérisé en ce que** les premières et les secondes données, déclenchées par une première information amenée à l'ordinateur central (CC), qui désigne la connexion d'un appareil domestique au circuit, par une seconde information qui identifie l'appareil domestique, sont actualisées.
